(19) Europäisches Patentamt
European Patent Office
Office européen des brevets

(11) **EP 4 636 877 A1**

(12) **EUROPEAN PATENT APPLICATION**
published in accordance with Art. 153(4) EPC

(43) Date of publication:
**22.10.2025 Bulletin 2025/43**

(21) Application number: **24886054.6**

(22) Date of filing: **07.10.2024**

(51) International Patent Classification (IPC):
**H01M 10/04** (2006.01)   **H01M 10/0585** (2010.01)

(52) Cooperative Patent Classification (CPC):
**H01M 10/04; H01M 10/0585;** Y02E 60/10;
Y02P 70/50

(86) International application number:
**PCT/KR2024/015165**

(87) International publication number:
**WO 2025/095378 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.10.2023   KR 20230146536
04.10.2024   KR 20240134545**

(71) Applicant: **LG Energy Solution, Ltd.
Seoul 07335 (KR)**

(72) Inventors:
• **KIM, Na Yoon
Daejeon 34122 (KR)**
• **KIM, Ji Young
Daejeon 34122 (KR)**
• **LEE, Daejin
Daejeon 34122 (KR)**
• **HWANG, Sunwoo
Daejeon 34122 (KR)**
• **CHA, Hyohyun
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **BATTERY CELL PRESSING PAD AND BATTERY CELL PRESSING APPARATUS COMPRISING SAME**

(57)   The present invention relates to a battery cell pressurization pad and a battery cell pressurization device comprising same, and more particularly to a battery cell pressurization pad for improving the performance of an all-solid-state battery cell.

[FIG. 2]

## Description

[Technical Field]

The present invention relates to a battery cell pressurization pad and a battery cell pressurization device comprising same, and more particularly to a battery cell pressurization pad for improving the performance of an all-solid-state battery cell.

This application claims the benefit of priority to Korean Patent Application No. 10-2023-0146536, filed October 30, 2023, and Korean Patent Application No. 10-2024-0134545, filed October 4, 2024, the disclosures of which are incorporated herein by reference in their entirety.

[Related Art]

As the technology development and the demand for mobile devices increase, rechargable secondary batteries are being used extensively as an energy source for a variety of mobile devices. Secondary batteries are also gaining attention as an energy source for electric and hybrid vehicles, which are being proposed as a way to solve air pollution from conventional gasoline and diesel vehicles.

Secondary batteries are categorized into coin-type batteries, cylindrical-type batteries, angular-type batteries, and pouch-type batteries based on the shape of the battery case. Among them, pouch-type batteries are attracting a lot of attention because they use a pouch exterior material consisting of a metal layer (foil) and a multilayer film of synthetic resin coated on the upper and lower surfaces of the metal layer to form the exterior, which can significantly reduce the weight of the battery compared to cylindrical or angular-type batteries using a metal can, making it possible to reduce the weight of the battery, and they have the advantage of being able to change into various shapes.

Pouch-type batteries are typically manufactured by a process that activates the battery cell after the battery assembly process. The activation process typically involves pressurizing the battery cell with a jig and applying a current to the battery cell to charge and discharge it to a predetermined voltage.

In the manufacture of pouch-type batteries, it is important that the battery cells are pressurized uniformly during the battery assembly process. In particular, during the manufacturing of all-solid-state batteries, it is important to form a good contact interface between the positive electrode and negative electrode and the solid electrolyte.

However, in order to improve the contact between the positive electrode and negative electrode and the solid electrolyte, charging or discharging is carried out with clamping pressure applied to the battery cell, which causes uneven pressure to be applied to the battery cell area, resulting in a decrease in cell life performance, affecting the initial charge/discharge efficiency, etc.

Therefore, it is necessary to develop a pressurization pad to ensure that the initial charge and discharge efficiency and performance of all-solid-state batteries are good, and that the charge and discharge cycles proceed well.

[Prior art]

(Patent Reference 1) Japanese Patent No. 6912658 (2021.07.12.)

[Detailed Description of the Invention]

[Technical Problem]

One object of the present invention is to provide a battery cell pressurization pad that ensures uniform pressure is applied when a battery cell is clamped into a jig in the manufacture of all-solid-state batteries.

Another object of the present invention is to provide a battery cell pressurization pad that enables the manufacture of batteries with improved initial charge/discharge efficiency and performance.

Another object of the present invention is to provide a battery cell pressurization pad that improves the charge/discharge cycle performance of all-solid-state batteries.

[Technical Solution]

In one example of the present invention, there is provided a battery cell pressurization pad for pressurizing a battery cell having electrodes and a solid electrolyte laminated thereto, wherein the battery cell pressurization pad comprises a first pressurization pad in contact with one side of the battery cell and pressurizing one side of the battery cell, and a second pressurization pad stacked on the first pressurization pad and in contact with one side of a pressurization jig.

One example of the present invention provides a battery cell pressurization pad, wherein the first pressurization pad pressurizes both sides of the battery cell located therebetween, and comprises a first pressurization pad 1-1 pressurizing one side of the battery cell and a first pressurization pad 1-2 pressurizing the other side of the battery cell.

In one example of the present invention, there is provided a battery cell pressurization pad, wherein the second pressurization pad comprises a second pressurization pad 2-1 stacked on top of the first pressurization pad 1-1 and a second pressurization pad 2-2 stacked on top of the first pressurization pad 1-2, wherein the second pressurization pad 2-1 and the second pressurization pad 2-2 are each in contact with one side of the opposing pressurization jigs.

One example of the present invention provides a battery cell pressurization pad, wherein a compression force deflection (CFD) at 60% of the first pressurization pad and second pressurization pad is greater than or equal to 4,000 kPa.

One example of the present invention provides a battery cell pressurization pad, wherein the CFD at 60% of the first pressurization pad is greater than the CFD at 60% of the second pressurization pad.

One example of the present invention provides a battery cell pressurization pad, wherein a CFD at 60% of the first pressurization pad is at least 7,000 kPa.

One example of the present invention provides a battery cell pressurization pad, wherein the ratio of the thickness (Tc) of the battery cell and the thickness (T1) of the first pressurization pad is 1: 0.01 to 0.5.

In one example of the present invention, a battery cell pressurization pad is provided, wherein the thickness of the first pressurization pad satisfies Formula 1 below:

[Formula 1]

$$T_1 > T_p - T_u$$

wherein $T_p$ is the thickness of the positive electrode in the battery cell, and
$T_u$ is the thickness of the pouch film in the battery cell.

One example of the present invention provides a battery cell pressurization pad in which, upon compressing the first pressurization pad a plurality of times to a strain of 80% based on an initial thickness, the thickness of the first pressurization pad is reduced by at least 60% based on the initial thickness.

One example of the present invention provides a battery cell pressurization pad, wherein the CFD at 50% of the first pressurization pad and second pressurization pad is greater than or equal to 2,000 kPa.

One example of the present invention provides a battery cell pressurization pad, wherein the CFD at 50% of the first pressurization pad is greater than the CFD at 50% of the second pressurization pad.

One example of the present invention provides a battery cell pressurization pad, wherein a compression force deflection (CFD) at 50% of the first pressurization pad is at least 3,000 kPa.

One example of the present invention provides a battery cell pressurization device comprising the battery cell pressurization pad.

One example of the present invention provides a battery cell pressurization device, wherein a battery cell is disposed between the battery cell pressurization pads.

One example of the present invention provides a battery cell pressurization device that uniaxially pressurizes or isotropically pressurizes the battery cell.

[Advantageous Effects]

A battery cell pressurization pad according to the present invention can ensure that uniform pressure is applied when the battery cell is clamped into the jig.

The battery cell pressurization pad according to the present invention enables the fabrication of all-solid-state batteries with excellent initial charge/discharge efficiency and improved performance.

A battery cell pressurization pad according to the present invention can improve the charge/discharge cycle performance of an all-solid-state battery.

[Brief Description of Drawing]

FIG. 1 is a schematic diagram illustrating a battery cell pressurization pad according to one example of the present invention.
FIG. 2 is a schematic diagram illustrating a battery cell pressurization pad according to one example of the present invention.

FIG. 3 is a diagram illustrating the charge and discharge rate of a battery cell pressurized using a battery cell pressurization pad according to Example 1, and Comparative Examples 1 and 2 of the present invention.

FIG. 4 is a diagram illustrating the cycle retention of a battery cell pressurized using a battery cell pressurization pad according to Example 1, and Comparative Examples 1 and 2 of the present invention.

FIG. 5 is a diagram illustrating the charge and discharge rate of a battery cell pressurized using a battery cell pressurization pad according to Example 1, and Comparative Examples 3 and 4 of the present invention.

FIG. 6 is a diagram illustrating the cycle retention of a battery cell pressurized using a battery cell pressurization pad according to Example 1, and Comparative Examples 3 and 4 of the present invention.

FIG. 7 is a diagram illustrating the charge and discharge rate of a battery cell pressurized using a battery cell pressurization pad according to Example 1 and Comparative Example 5 of the present invention.

FIG. 8 is a diagram illustrating the cycle retention of a battery cell pressurized using a battery cell pressurization pad according to Example 1 and Comparative Example 5 of the present invention.

FIG. 9 is a diagram illustrating the compression curve of a pressurization pad according to Comparative Example 6 of the present invention.

FIG. 10 is a diagram illustrating the charge and discharge rate of a battery cell pressurized using a battery cell pressurization pad according to Example 2 and Comparative Example 6 of the present invention.

FIG. 11 is a diagram illustrating the cycle retention of a battery cell pressurized using a battery cell pressurization pad according to Example 2 and Comparative Example 6 of the present invention.

FIG. 12 is a diagram illustrating the charge and discharge rate of a battery cell pressurized using a battery cell pressurization pad according to Example 1 and Comparative Example 7 of the present invention.

FIG. 13 is a diagram illustrating the cycle retention of a battery cell pressurized using a battery cell pressurization pad according to Example 1 and Comparative Example 7 of the present invention.

[Best Mode]

Examples of the present invention will now be described in detail with reference to the accompanying drawings. The drawings may exaggerate all or part of the configuration for illustrative purposes only.

It will also be apparent to those skilled in the art that the invention is not limited to what is shown in the accompanying drawings or described herein, and that the invention may be implemented in various forms without departing from the technical ideas of the invention.

In the process of manufacturing all-solid-state batteries, the interfacial contact between the electrode and the solid electrolyte is important for improving battery performance, such as initial charge/discharge efficiency, and charge/discharge cycles and the process of pressurizing the battery cell at high pressure is necessary to achieve the interfacial contact between the electrode and the solid electrolyte. In other words, during the pressurization process in the manufacture of all-solid-state batteries, the battery cell must be uniformly pressurized to facilitate the migration of lithium ions.

However, in order to improve the contact between the positive electrode and negative electrode and the solid electrolyte, charging or discharging is carried out with clamping pressure applied to the battery cell, which causes uneven pressure to be applied to the battery cell area, resulting in a decrease in cell life performance, decreasing the initial charge/discharge efficiency, etc.

To address these issues, the inventors of the present invention have completed a battery cell pressurization pad that improves the contact between the electrode and solid electrolyte during the pressurization process and enables uniform pressure to be applied to the battery cell.

Prior to the specific description of the battery cell pressurization pad according to one example of the present invention, the configuration of a battery cell pressurized by the pressurization pad will first be briefly described.

A battery cell according to the present invention may include a first electrode, an electrolyte layer, and a second electrode stacked sequentially. Here, the first electrode may be a positive electrode or a negative electrode. The second electrode may be a negative electrode or a positive electrode. The first electrode and the second electrode may be different electrodes.

The electrolyte layer may be disposed between the first electrode and the second electrode, and may have a size equal to the size of the first electrode and the second electrode, or may have a larger size compared to the first electrode and the second electrode. Here, the electrolyte layer may be, but is not limited to, a solid electrolyte.

The battery cell may include a pouch film on its outermost edge.

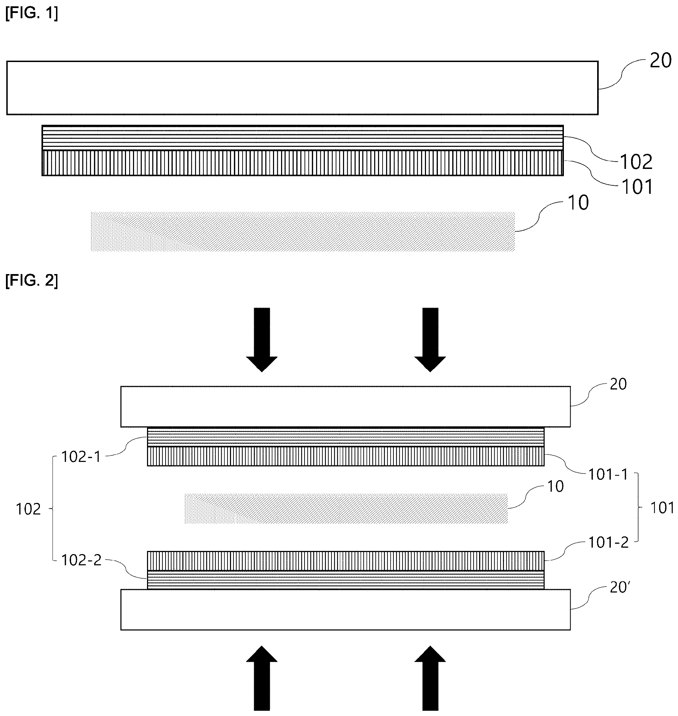

FIG. 1 is a schematic diagram illustrating a battery cell pressurization pad according to one example of the present invention.

Referring to FIG. 1, a battery cell pressurization pad according to one example of the present invention may include a first pressurization pad (101) for pressurizing a battery cell (10) with electrodes and solid electrolyte stacked thereon, contacting one side of the battery cell (10), and pressurizing one side of the battery cell, and a second pressurization pad (102) stacked on the first pressurization pad and contacting one side of a pressurization jig (20).

FIG. 2 is a schematic diagram illustrating a battery cell pressurization pad according to one example of the present invention.

Referring to FIG. 2, in a battery cell pressurization pad according to one example of the present invention, the first pressurization pad (101) pressurizes both sides of the battery cell (10) located therebetween, and may include a first pressurization pad 1-1 (101-1) pressurizing one side of the battery cell and a second pressurization pad 1-2 (101-2) pressurizing the other side of the battery cell. One side and the other side of the battery cell may be sides facing each other.

Further, in a battery cell pressurization pad according to one example of the present invention, the second pressurization pad comprises a second first pressurization pad 2-1 (102-1) stacked on top of the first pressurization pad 1-1, and a second pressurization pad 2-2 (102-2) stacked on top of the first pressurization pad 1-2, wherein the second pressurization pad 2-1 (102-1) and the second pressurization pad 2-2 (102-2) may each be in contact with one side of the pressurization jigs (20, 20') facing each other.

The battery cell pressurization pad according to one example of the present invention includes a first pressurization pad and a second pressurization pad, so that the pressurization pads of different properties can apply uniform pressure to the battery cell.

The battery cell pressurization pad according to one example of the present invention may have the compression force deflection (CFD) at 60% of the first pressurization pad and the second pressurization pad of 4,000 kPa or more. Here, CFD refers to the compression force deflection, which is a measure of the force required to compress the pressing pad at a certain strain rate (e.g., 50%, 60%). CFD values are a way to characterize the firmness and softness of a material and are used to measure its properties. It is also a relationship between stress and strain on a material, where compression describes the type of force, and deflection describes the amount of movement relative to a starting value (thickness).

Specifically, the CFD at 60% of the first pressurization pad and the second pressurization pad may be 4,000 kPa or more, 4,100 kPa or more, 4,200 kPa or more, 4,300 kPa or more, 4,400 kPa or more, 4,500 kPa or more, 4,600 kPa or more, 4,700 kPa or more, 4,800 kPa or more, 4,900 kPa or more, 5,000 kPa or more, 5,100 kPa or more, 5,200 kPa or more, 5,300 kPa or more, 5,400 kPa or more, 5,500 kPa or more, 5,600 kPa or more, 5,700 kPa or more, 5,800 kPa or more, 5,900 kPa or more, 6,000 kPa or more, 6,100 kPa or more, 6,200 kPa or more, 6,300 kPa or more, 6,400 kPa or more, 6,500 kPa or more, 6,600 kPa or more, 6,700 kPa or more, 6,800 kPa or more, 6,900 kPa or more, or 7,000 kPa or more.

In a battery cell pressurization pad according to one example of the present invention, the CFD at 60% of the first pressurization pad may be greater than the CFD at 60% of the second pressurization pad.

The battery cell pressurization pad according to one example of the present invention may have a CFD at 60% of the first pressurization pad of 7,000 kPa or more.

In a battery cell pressurization pad according to one example of the present invention, the ratio of the thickness (Tc) of the battery cell and the thickness (T1) of the first pressurization pad may be 1: 0.01 to 0.5. The thickness of the first pressurization pad may be 1% to 50% less than the thickness of the battery cell. If the thickness of the first pressurization pad is less than 1% or more than 50% based on the thickness of the battery cell, there may be difficulty in applying uniform pressure when pressurizing the battery cell.

In a battery cell pressurization pad according to one example of the present invention, the thickness ($T_1$) of the first pressurization pad may satisfy Formula 1 below:

$$[Formula\ 1]$$

$$T_1 > T_p - T_u$$

wherein $T_p$ is the thickness of the positive electrode in the battery cell, and
$T_u$ is the thickness of the pouch film in the battery cell.

In Formula 1, $T_p$ may represent the thickest portion of the battery cell and $T_u$ may represent the thinnest portion of the battery cell.

If the thickness ($T_1$) of the first pressurization pad is less than or equal to the $T_p$ - $T_u$ value, it may be difficult to apply uniform pressure when pressurizing the battery cell with the first pressurization pad.

In a battery cell pressurization pad according to one example of the present invention, when the first pressurization pad is compressed a plurality of times to a strain of 80% based on an initial thickness, the thickness of the first pressurization pad may be reduced by at least 60% based on the initial thickness.

The stiffness of the first pressurization pad may increase as the first pressurization pad is compressed multiple times at a high strain rate relative to its initial thickness. This indicates that the first pressurization pad has good elastic resilience.

In a battery cell pressurization pad according to one example of the present invention, the CFD at 50% of the first pressurization pad and the second pressurization pad may be greater than or equal to 2,000 kPa.

Specifically, the CFD at 50% of the first pressurization pad and the second pressurization pad may be 2,000 kPa or more, 2,100 kPa or more, 2,200 kPa or more, 2,300 kPa or more, 2,400 kPa or more, 2,500 kPa or more, 2,600 kPa or more, 2,700 kPa or more, 2,800 kPa or more, 2,900 kPa or more, 3,000 kPa or more, 3,100 kPa or more, 3,200 kPa or more, 3,300 kPa or more, 3,400 kPa or more, 3,500 kPa or more, 3,600 kPa or more, 3,700 kPa or more, 3,800 kPa or more, 3,900 kPa or more, or 4,000 kPa or more.

In a battery cell pressurization pad according to one example of the present invention, the CFD at 50% of the first pressurization pad may be greater than the CFD at 50% of the second pressurization pad.

The battery cell pressurization pad according to one example of the present invention may have a CFD at 50% of the first pressurization pad of 3,000 kPa or more.

If the CFD at 50% or the CFD at 60% of the first pressurization pad is greater than the CFD at 50% or the CFD at 60% of the second pressurization pad, it may mean that the first pressurization pad has a higher firmness and lower softness than the second pressurization pad.

In a battery cell pressurization pad according to one example of the present invention, the first pressurization pad and the second pressurization pad may be any one of, but not limited to, polytetrafluoroethylene (PTFE), silicone, organic rubber, polyurethane, polystyrene, polyethylene, polypropylene, ethylene vinyl acetate (EVA), and polyethylene terephthalate (PET).

A battery cell pressurization pad according to one example of the present invention may be attached to one side of a pressurization jig that pressurizes a battery cell. Further, the battery cell pressurization pad may be pressurized by a pressurization jig after contacting the battery cell pressurization pad with a surface of the battery cell before pressurizing the battery cell. Thus, there are no restrictions on how the battery cell pressurization pad can be used, and no restrictions on the type of jig that pressurizes the battery cell.

One example of the present invention may provide a battery cell pressurization device comprising the battery cell pressurization pad. The form of the battery cell pressurization device is not limited.

The battery cell pressurization device may allow a battery cell to be disposed between the battery cell pressurization pad. Thus, when pressurized, the battery cell may be subjected to uniform pressure by the battery cell pressurization pad according to one example of the present invention.

Further, the battery cell pressurization device may uniaxially pressurize or isotropically pressurize the battery cell.

[Mode for Practicing the Invention]

Hereinafter, preferred examples are described for the purpose of illustrating the present invention, but it will be apparent to those skilled in the art that various changes and modifications are possible within the scope of the invention and the technical idea, and that such changes and modifications fall within the scope of the appended patent claims.

### Example 1

Pressurization pad was fabricated by laminating 0.5 mm of polytetrafluoroethylene (PTFE) and 0.3 mm of silicone layer.

### Example 2

Pressurization pad was manufactured by laminating 0.5 mm of polytetrafluoroethylene (PTFE) and a 0.3 mm layer of layer, with each pressurization pad having a CFD at 60% of at least 4,000 kPa.

### Comparative Example 1

Pressurization pad was fabricated using only 0.5 mm of polytetrafluoroethylene (PTFE).

### Comparative Example 2

Pressurization pad was fabricated using only a 0.3 mm layer of silicone.

### Comparative Example 3

Pressurization pad was manufactured using only 0.5 mm of polyurethane (PU).

**Comparative Example 4**

Pressurization pad was manufactured using only 1.0 mm of polyurethane (PU).

**Comparative Example 5**

Pressurization pad was prepared using a 0.5 mm layer of polytetrafluoroethylene (PTFE) and a 0.3 mm layer of silicone, but the stacking order was different from those in the above examples.

**Comparative Example 6**

Pressurization pad was manufactured using 0.5 mm of polytetrafluoroethylene (PTFE) and 0.2 mm of polyurethane (PU), with each pressurization pad having a CFD at 60% of at least 4,000 kPa.

**Comparative Example 7**

Pressurization pad was fabricated using 1.0 mm of polytetrafluoroethylene (PTFE) and a 0.3 mm layer of silicone.

**Experimental Example 1: Evaluating battery cell performance**

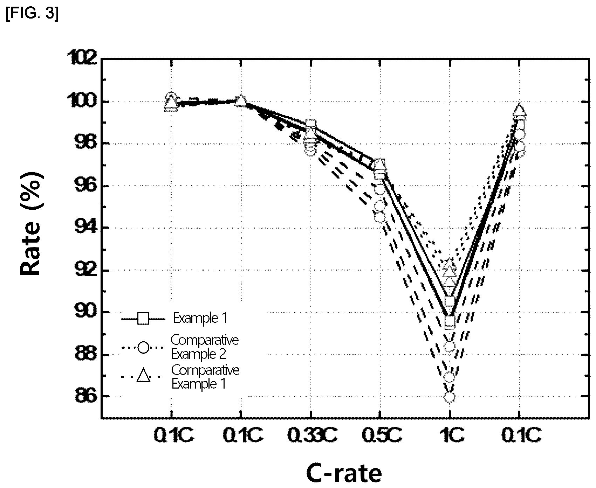

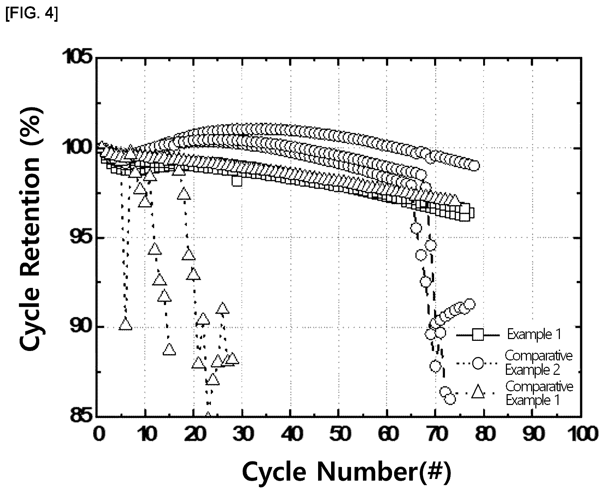

The battery cell was pressurized using the pressurization pads fabricated in Example 1, and Comparative Examples 1 and 2 above, and spring jig and torque wrench. The battery cell performance was evaluated at the time of clamping into the cell, including the cell's charge/discharge rate and cycle retention rate. The battery cell performance is shown in FIGs. 3 and 4.

FIG. 3 is a diagram illustrating the charge and discharge rate of a battery cell pressurized using a battery cell pressurization pad according to one example of the present invention, and Comparative Examples 1 and 2. C-rate is a value that represents the rate at which the battery is charged or discharged.

Referring to FIG. 3, it is observed that the charge/discharge rate of the battery cell pressurized using the battery cell pressurization pad according to Example 1 is lower than the charge/discharge rate at the high rate (1C) of the battery cell pressurized using the battery cell pressurization pad according to Comparative Example 1 and higher than the charge/discharge rate of the battery cell pressurized using the battery cell pressurization pad according to Comparative Example 2.

FIG. 4 is a diagram illustrating the cycle retention of a battery cell pressurized using a battery cell pressurization pad according to Example 1 and Comparative Examples 1 and 2 of the present invention.

Referring to FIG. 4, it is observed that the cycle retention rate of a battery cell pressurized using the battery cell pressurization pad according to Example 1 drops at a constant rate over a plurality of cycles, whereas the cycle retention rate of a battery cell pressurized using the battery cell pressurization pad according to Comparative Example 1 experiences a short in the initial cycle, and the cycle retention rate of a battery cell pressurized using the battery cell pressurization pad according to Comparative Example 2 increases and then drops again over a plurality of cycles, demonstrating unstable retention rates.

Therefore, it was found that using two types of pressurization pads, such as the battery cell pressurization pad according to Example 1, compared to using only one pressurization pad, such as the battery cell pressurization pad according to Comparative Examples 1 and 2, resulted in uniform pressure being applied to the battery cell when pressing the battery cell, thereby improving the charge/discharge rate and cycle retention of the battery cell.

**Experimental Example 2: Evaluating battery cell performance**

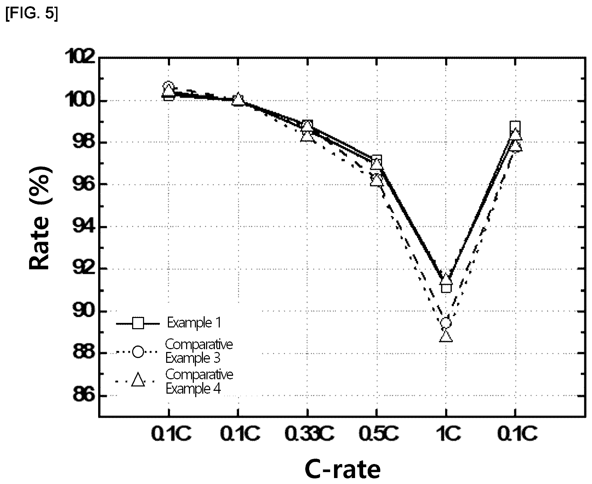

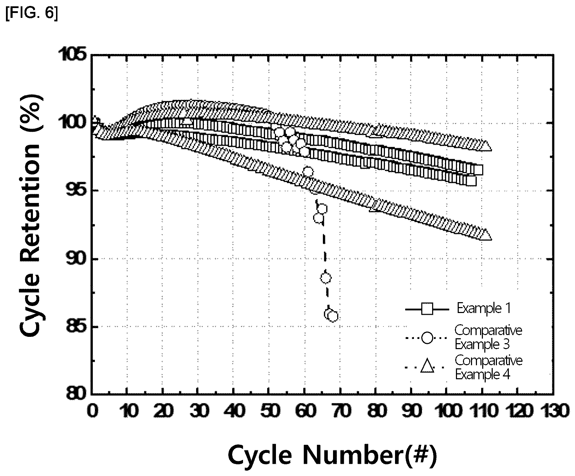

The battery cell was pressurized using the pressurization pads fabricated in Example 1, and Comparative Examples 3 and 4 above, and spring jig and torque wrench. The battery cell performance was evaluated at the time of clamping into the cell, including the cell's charge/discharge rate and cycle retention rate. The battery cell performance is shown in FIGs. 5 and 6.

FIG. 5 is a diagram illustrating the charge and discharge rate of a battery cell pressurized using a battery cell pressurization pad according to Example 1, and Comparative Examples 3 and 4 of the present invention. C-rate is a value that represents the rate at which the battery is charged or discharged.

Referring to FIG. 5, it is observed that the charge/discharge rate of the battery cell pressurized using the battery cell pressurization pad according to Example 1 is significantly lower than the charge/discharge rate at the high rate (1C) of the battery cell pressurized using the battery cell pressurization pad according to Comparative Example 3 and higher than the charge/discharge rate of the battery cell pressurized using the battery cell pressurization pad according to Comparative Example 4.

FIG. 6 is a diagram illustrating the cycle retention of a battery cell pressurized using a battery cell pressurization pad according to Example 1, and Comparative Examples 3 and 4 of the present invention.

Referring to FIG. 6, it is observed that the cycle retention rate of a battery cell pressurized using the battery cell pressurization pad according to Example 1 drops at a constant rate over a plurality of cycles, whereas the cycle retention rate of a battery cell pressurized using the battery cell pressurization pad according to Comparative Example 3 experiences a short at about 50 cycles, and the cycle retention rate of a battery cell pressurized using the battery cell pressurization pad according to Comparative Example 4 varies significantly over multiple cycles.

Therefore, it was found that using two types of pressurization pads having different softness and firmness, such as the battery cell pressurization pad according to Example 1, compared to using a pressurization pad having low softness, such as the battery cell pressurization pad according to Comparative Examples 3 and 4, resulted in uniform pressure being applied to the battery cell when pressing the battery cell, thereby improving the charge/discharge rate and cycle retention of the battery cell.

**Experimental Example 3: Evaluating battery cell performance**

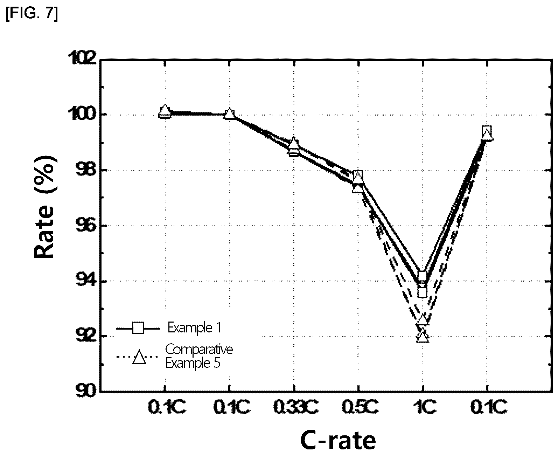

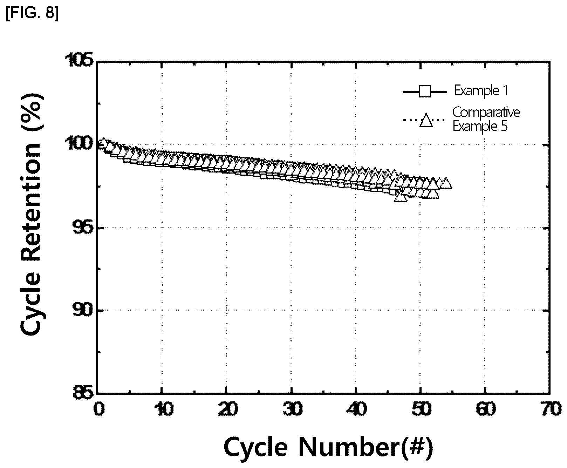

The battery cell was pressurized using the pressurization pads fabricated in Example 1, and Comparative Example 5 above, and spring jig and torque wrench. The battery cell performance was evaluated at the time of clamping into the cell, including the cell's charge/discharge rate and cycle retention rate. The battery cell performance is shown in FIGs. 7 and 8.

FIG. 7 is a diagram illustrating the charge and discharge rate of a battery cell pressurized using a battery cell pressurization pad according to Example 1 and Comparative Example 5 of the present invention. C-rate is a value that represents the rate at which the battery is charged or discharged.

Referring to FIG. 7, it is observed that the charge/discharge rate of the battery cell pressurized using the battery cell pressurization pad according to Comparative Example 5 is significantly lower than the charge/discharge rate at the high rate (1C) of the battery cell pressurized using the battery cell pressurization pad according to Example 1.

FIG. 8 is a diagram illustrating the cycle retention of a battery cell pressurized using a battery cell pressurization pad according to Example 1 and Comparative Example 5 of the present invention.

Referring to FIG. 8, it is observed that the cycle retention rate of a battery cell pressurized using the battery cell pressurization pad according to Example 1 deviates less from the cycle retention rate of a battery cell pressurized using the battery cell pressurization pad according to Example 5 over a plurality of cycles.

Therefore, it was found that when the stacking order of the first pressurization pad and the second pressurization pad is different, such as the battery cell pressurization pad according to Comparative Example 5, the charge/discharge rate of the battery cell at a high rate (1C) is significantly reduced.

**Experimental Example 4: CFD (compression force deflection) measurement of battery cell pressurization pad**

50 mm x 50 mm samples of polytetrafluoroethylene used as the first pressurization pad, and the silicone layer used as the second pressurization pad in the pressurization pad prepared in Example 1, and the pressurization pad according to Comparative Examples 3 and 4 were prepared, respectively. The samples were placed on the bottom compression plate of the compression tester and compressed at a speed of 50 mm per minute to measure the stress as a function of the degree of compression. In other words, the CFD values of the pressurization pads were measured using the ASTM D3574 standard test. The measured CFD values of the pressurization pad are shown in Table 1 below.

[Table 1]

| | Peak Stress (kPa) | CFD 10% (kPa) | CFD 20% (kPa) | CFD 30% (kPa) | CFD 40% (kPa) | CFD 50% (kPa) | CFD 60% (kPa) | CFD 70% (kPa) | CFD 80% (kPa) |
|---|---|---|---|---|---|---|---|---|---|
| First pressurization pad | 17,782 | 168 | 386 | 791 | 1,570 | 3,256 | 7,447 | - | - |
| Second pressurization pad | 17,552 | 195 | 440 | 772 | 1,285 | 2,241 | 4,278 | 9,211 | - |
| Comparative Example 3 | 7,754 | 24 | 35 | 48 | 70 | 116 | 237 | 723 | 6,211 |

(continued)

| | Peak Stress (kPa) | CFD 10% (kPa) | CFD 20% (kPa) | CFD 30% (kPa) | CFD 40% (kPa) | CFD 50% (kPa) | CFD 60% (kPa) | CFD 70% (kPa) | CFD 80% (kPa) |
|---|---|---|---|---|---|---|---|---|---|
| Comparative Example 4 | 5,773.5 | 46 | 72 | 102 | 147 | 222 | 383 | 878 | 4,430 |

**Experimental Example 5: Battery cell performance evaluation**

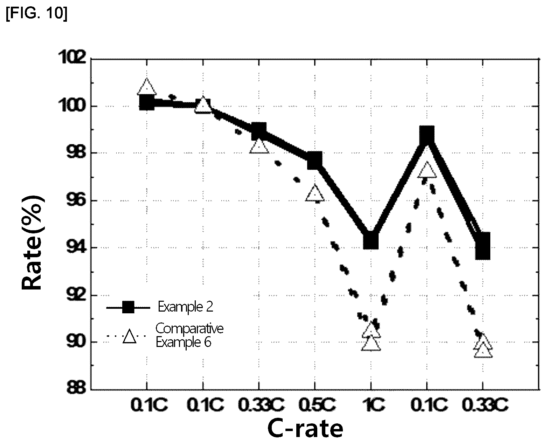

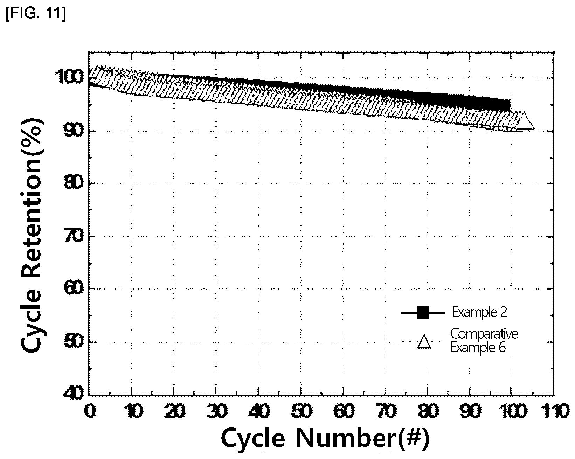

The battery cell was pressurized using the pressurization pads fabricated in Example 2 and Comparison Example 6. The battery cell performance was evaluated at the time of clamping into the cell, including the cell's charge/discharge rate and cycle retention rate. The battery cell performance is shown in FIGs. 10 and 11.

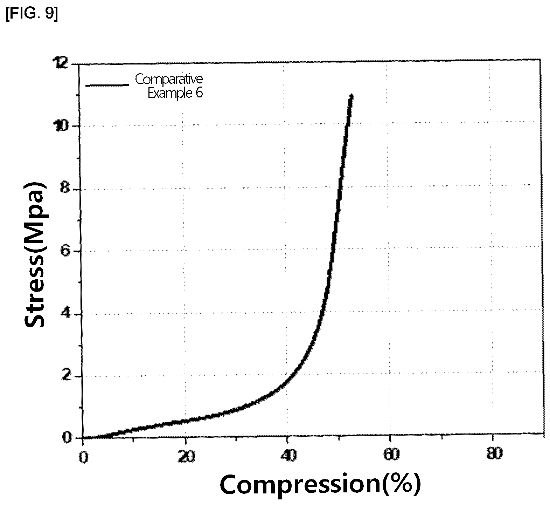

FIG. 9 is a diagram illustrating a compression curve of a pressurization pad according to Comparative Example 6 of the present invention. The compression curve graph of the PU pad used in Comparative Example 6 shows that the stress increases as the compression ratio increases, in particular, the stress is less than or equal to 2 MPa at a compression ratio of 40% or less, but rises sharply to 10 MPa around 50%.

FIG. 10 is a diagram illustrating the charge and discharge rate of a battery cell pressurized using a battery cell pressurization pad according to Example 2 and Comparative Example 6 of the present invention. C-rate is a value that represents the rate at which the battery is charged or discharged.

Referring to FIG. 10, it is found that the charge/discharge rate of the battery cell pressurized using the battery cell pressurization pad according to Example 2 is about 4% or higher than the charge/discharge rate at the high rate (1C) of the battery cell pressurized using the battery cell pressurization pad according to Comparative Example 6.

FIG. 11 is a diagram illustrating the cycle retention of a battery cell pressurized using a battery cell pressurization pad according to Example 2 and Comparative Example 6 of the present invention.

Referring to FIG. 11, it is observed that the cycle retention rate of a battery cell pressurized using the battery cell pressurization pad according to Example 2 drops at a constant rate over a plurality of cycles, while the cycle retention rate of a battery cell pressurized using the battery cell pressurization pad according to Comparative Example 6 shows a nearly similar pattern for the initial cycles, but remains about 5% or more different as the number of cycles increases.

Therefore, it was found that using the battery cell pressurization pad according to Example 2 improves the charge/discharge rate and cycle retention rate of the cell due to the uniform pressure applied when pressurizing the battery cell, even when the CFD at 60% is at least 4,000 kPa under the same conditions as Comparative Example 6.

**Experimental Example 6: Evaluating battery cell performance**

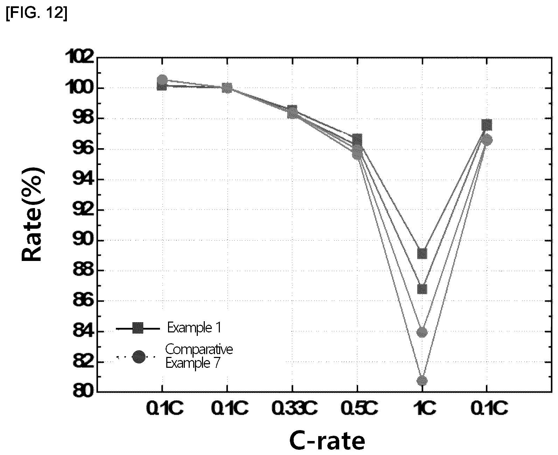

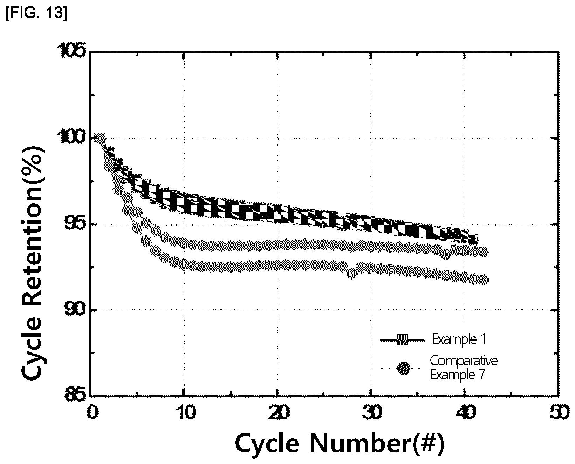

A 0.5 mm battery cell was pressurized using the pressurization pad fabricated in Example 1 and Comparative Example 7. The battery cell performance was evaluated at the time of clamping into the cell, including the cell's charge/discharge rate and cycle retention rate. The battery cell performance is shown in FIGs. 12 and 13.

FIG. 12 is a diagram illustrating the charge and discharge rate of a battery cell pressurized using a battery cell pressurization pad according to Example 1 and Comparative Example 7 of the present invention. C-rate is a value that represents the rate at which the battery is charged or discharged.

Referring to FIG. 12, it can be seen that the charge/discharge rate of the battery cell pressurized using the battery cell pressurization pad according to Comparative Example 7 is significantly lower than the charge/discharge rate at high rate (1C) of the battery cell pressurized using the battery cell pressurization pad according to Example 1.

FIG. 13 is a diagram illustrating the cycle retention of a battery cell pressurized using a battery cell pressurization pad according to Example 1 and Comparative Example 7 of the present invention.

Referring to FIG. 13, it is observed that the cycle retention rate of a battery cell pressurized using the battery cell pressurization pad according to Example 1 drops at a constant rate over a plurality of cycles, while the cycle retention rate of a battery cell pressurized using the battery cell pressurization pad according to Comparative Example 7 shows a sharp drop in cycle retention within 10 cycles.

Therefore, it was found that when the thickness of the first pressurization pad, such as the battery cell pressurization pad according to Comparative Example 7, becomes more than a certain thickness, the charge/discharge rate and cycle retention rate of the battery cell decrease.

While examples of the present invention have been described above, it is not intended to limit the present invention to the above described examples. Those skilled in the art will be able to practice examples of the present invention with suitable modifications, including omitting, changing, substituting, or adding other configurations of all or some of the components of the present invention, with reference to this specification and the accompanying drawings, without departing from the technical ideas of the present invention.The terms and expressions used herein are to be interpreted broadly and should not be construed in a restrictive sense. In this specification, the expression "including" does not exclude the presence or addition of one or more other components in addition to the mentioned configuration.

In this specification, singular expressions include plural unless the context expressly excludes them.

Each of the exemplary examples described herein can be combined with each other, and unless contradicted, what is described in a particular example may be equally applicable to other examples, even if not described in the other examples.

[Reference Numerals]

| 10: | Battery cell |
| 20, 20': | Pressurization jig |
| 101. | First pressurization pad |
| 101-1: | First pressurization pad 1-1 |
| 101-2: | First pressurization pad 1-2 |
| 102: | Second pressurization pad |
| 102-1: | Second pressurization pad 2-1 |
| 102-2: | Second pressurization pad 2-2 |

**Claims**

1. A battery cell pressurization pad that pressurizes a battery cell with electrodes and solid electrolyte stacked thereon, comprising:

   a first pressurization pad in contact with one side of the battery cell, and pressurizing one side of the battery cell; and
   a second pressurization pad stacked on the first pressurization pad, and in contact with one side of the pressurization jig.

2. The battery cell pressurization pad according to claim 1,
   wherein the first pressurization pad pressurizes both sides of the battery cell located therebetween, and comprises:

   a first pressurization pad 1-1 which pressurizes one side of the battery cell; and
   a first pressurization pad 1-2 which pressurizes the other side of the battery cell.

3. The battery cell pressurization pad according to claim 2,
   wherein the second pressurization pad comprises:

   a second pressurization pad 2-1 stacked on the first pressurization pad 1-1; and
   a second pressurization pad 2-2 stacked on the first pressurization pad 1-2;
   wherein the second pressurization pad 2-1 and the second pressurization pad 2-2 each contact one side of the pressurization jig facing each other.

4. The battery cell pressurization pad according to claim 1,
   wherein the compression force deflection (CFD) at 60% of the first pressurization pad and the second pressurization pad is at least 4,000 kPa.

5. The battery cell pressurization pad according to claim 1,
   wherein the CFD at 60% of the first pressurization pad is greater than the CFD at 60% of the second pressurization pad.

6. The battery cell pressurization pad according to claim 1,
   wherein a CFD at 60% of the first pressurization pad is at least 7,000 kPa.

7. The battery cell pressurization pad according to claim 1,
   wherein the ratio of the thickness ($T_c$) of the battery cell and the thickness ($T_1$) of the first pressurization pad is 1: 0.01 to 0.5.

8. The battery cell pressurization pad according to claim 1,

    wherein the thickness ($T_1$) of the first pressurization pad may satisfy Formula 1 below:

[Formula 1]

$$T_1 > T_p - T_u$$

   wherein $T_p$ is the thickness of the positive electrode in the battery cell, and
   $T_u$ is the thickness of the pouch film in the battery cell.

9. The battery cell pressurization pad according to claim 1,
   wherein upon compressing the first pressurization pad a plurality of times to a strain of 80% based on an initial thickness, the thickness of the first pressurization pad is reduced by at least 60% based on the initial thickness.

10. The battery cell pressurization pad according to claim 1,
    wherein the CFD at 50% of the first pressurization pad and the second pressurization pad is at least 2,000 kPa.

11. The battery cell pressurization pad according to claim 1,
    wherein the CFD at 50% of the first pressurization pad is greater than the CFD at 50% of the second pressurization pad.

12. The battery cell pressurization pad according to claim 1,
    wherein the compression force deflection (CFD) at 50% of the first pressurization pad is at least 3,000 kPa.

13. A battery cell pressurization device, comprising a battery cell pressurization pad according to any one of claims 1 to 12.

14. The battery cell pressurization device according to claim 13,
    wherein the battery cell is disposed between the battery cell pressurization pads.

15. The battery cell pressurization device according to claim 14,
    which uniaxially pressurizes or isotropically pressurizes the battery cell.

[FIG. 1]

20

102

101

10

[FIG. 2]

20

102-1

101-1

10

102

101

102-2

101-2

20'

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

## INTERNATIONAL SEARCH REPORT

| International application No. |
|---|
| **PCT/KR2024/015165** |

| A. | CLASSIFICATION OF SUBJECT MATTER |
|---|---|

**H01M 10/04**(2006.01)i; **H01M 10/0585**(2010.01)i

According to International Patent Classification (IPC) or to both national classification and IPC

| B. | FIELDS SEARCHED |
|---|---|

Minimum documentation searched (classification system followed by classification symbols)

H01M 10/04(2006.01); H01M 2/10(2006.01); H01M 50/105(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 압축(compression), 지그(jig), 패드(pad), 두께(thickness)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0054027 A (LG ENERGY SOLUTION, LTD.) 02 May 2022 (2022-05-02)<br>See paragraphs [0004]-[0008], [0017] and [0061]-[0111] and figure 2. | 1-15 |
| A | KR 10-2018-0038181 A (LG CHEM, LTD.) 16 April 2018 (2018-04-16)<br>See paragraph [0077] and figure 6. | 1-15 |
| A | KR 10-2023-0060711 A (LG ENERGY SOLUTION, LTD.) 08 May 2023 (2023-05-08)<br>See paragraph [0042] and figure 3. | 1-15 |
| A | KR 10-2023-0075963 A (LG ENERGY SOLUTION, LTD.) 31 May 2023 (2023-05-31)<br>See paragraph [0041]. | 1-15 |
| A | CN 110431701 A (ROECHLING AUTOMOTIVE SE & CO. KG et al.) 08 November 2019 (2019-11-08)<br>See paragraph [0045]. | 1-15 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 January 2025** | **07 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/015165**

| Patent document cited in search report | | | Publication date (day/month/year) | Patent family member(s) | | | Publication date (day/month/year) |
|---|---|---|---|---|---|---|---|
| KR | 10-2022-0054027 | A | 02 May 2022 | CN | 114946063 | A | 26 August 2022 |
| | | | | EP | 4071870 | A1 | 12 October 2022 |
| | | | | EP | 4071870 | A4 | 24 January 2024 |
| | | | | US | 2023-0057926 | A1 | 23 February 2023 |
| | | | | WO | 2022-085976 | A1 | 28 April 2022 |
| KR | 10-2018-0038181 | A | 16 April 2018 | KR | 10-2197691 | B1 | 31 December 2020 |
| KR | 10-2023-0060711 | A | 08 May 2023 | | None | | |
| KR | 10-2023-0075963 | A | 31 May 2023 | CN | 116724433 | A | 08 September 2023 |
| | | | | EP | 4258401 | A1 | 11 October 2023 |
| | | | | EP | 4258401 | A4 | 27 November 2024 |
| | | | | JP | 2024-503436 | A | 25 January 2024 |
| | | | | US | 2024-0072289 | A1 | 29 February 2024 |
| | | | | WO | 2023-096323 | A1 | 01 June 2023 |
| CN | 110431701 | A | 08 November 2019 | CN | 110431701 | B | 28 April 2023 |
| | | | | DE | 102017209612 | A1 | 13 December 2018 |
| | | | | US | 11444313 | B2 | 13 September 2022 |
| | | | | US | 2020-0067127 | A1 | 27 February 2020 |
| | | | | WO | 2018-224451 | A1 | 13 December 2018 |

Form PCT/ISA/210 (patent family annex) (July 2022)

**EP 4 636 877 A1**

**REFERENCES CITED IN THE DESCRIPTION**

**Patent documents cited in the description**

- KR 1020230146536
- KR 1020240134545
- JP 6912658 B